# EUROPÄISCHE PATENTANMELDUNG

(11) **EP 4 559 637 A1**
(43) Veröffentlichungstag der Anmeldung: **28.05.2025**
(21) Anmeldenummer: 24212284.4
(22) Anmeldetag: 12.11.2024
(51) Int. Cl.: B25J 9/00, B25J 13/08, G05B 19/418, B65G 47/90, B25J 9/16

(54) **VORRICHTUNG UND VERFAHREN ZUM VERSETZEN VON GEGENSTÄNDEN**

(30) Priorität: 22.11.2023 DE 102023132582
(71) Anmelder: MULTIVAC Sepp Haggenmüller SE & Co. KG, 87787 Wolfertschwenden (DE)
(72) Erfinder: Buchenberg, Wolfgang, 87487 Wiggensbach (DE)
(74) Vertreter: Grünecker Patent- und Rechtsanwälte PartG mbB

(57) **Zusammenfassung**

Eine Vorrichtung (1) und Verfahren zum Versetzen von Gegenständen. Die Vorrichtung (1) umfasst einen Förderer (2), der zum Fördern einer Vielzahl von Gegenständen (100) konfiguriert ist, und eine Förderabstandserfassungseinheit (8), die dazu konfiguriert ist, einen Förderabstand (10) zwischen einem zu versetzenden ersten Gegenstand (101) der Vielzahl von Gegenständen (100) und einem zu versetzenden zweiten Gegenstand (102) der Vielzahl von Gegenständen (100) zu bestimmen. Der erste Gegenstand (101) ist vor dem Versetzen des zweiten Gegenstands (102) zu versetzen. Die Vorrichtung (1) umfasst des Weiteren eine Handhabungsvorrichtung (7), die dazu konfiguriert ist, zu versetzende Gegenstände (101, 102) der Vielzahl von Gegenständen (100) von dem Förderer (2) zu einer ersten Ablageposition (13) zu versetzen. Die Vorrichtung (1) ist dazu konfiguriert, eine Bewegungsgeschwindigkeit und/oder Bewegungsbeschleunigung basierend auf dem bestimmten Förderabstand (10) zu bestimmen. Die Handhabungsvorrichtung (7) ist dazu konfiguriert, den zweiten zu versetzenden Gegenstand (102) mit der bestimmten Bewegungsgeschwindigkeit und/oder der bestimmten Bewegungsbeschleunigung zu versetzen.

## Beschreibung

Die Erfindung bezieht sich auf Vorrichtungen und Verfahren zum Versetzen von Gegenständen.

Aus der EP 1 819 994 B2 ist ein Verfahren und ein System zum Gruppieren zugeführter Objekte bekannt. Dort werden Objekte von einer Objekttransportvorrichtung auf eine Gruppentransportvorrichtung bewegt. Dazu werden mehrere Handhabungsmittel in Form von Robotern eingesetzt. Vorher werden die Objekte gewogen. Die auf der Gruppentransportvorrichtung zusammengestellten Gruppen sollen ein gewünschtes Gesamtgewicht aufweisen. Daher wird durch das System bestimmt welches Objekt durch welchen Roboter von der Objekttransportvorrichtung aufgenommen und zu der zugewiesenen Gruppe auf der Gruppentransportvorrichtung bewegt werden soll. Bei konventionellen Systemen werden die Roboter mit ihrer maximalen Geschwindigkeit betrieben, sodass bei größerem zeitlichen Abstand zwischen den Umsetzvorgängen Wartezeiten entstehen, in denen die Roboter stillstehen.

Es ist eine Aufgabe der Erfindung, eine verbesserte Vorrichtung und ein verbessertes Verfahren zum Versetzen von Gegenständen anzugeben, durch welche Wartezeiten reduziert werden können. Diese Aufgabe wird gelöst durch eine Vorrichtung mit den Merkmalen des Anspruchs 1 sowie durch ein Verfahren mit den Merkmalen des Anspruchs 7.

Es wird eine Vorrichtung zum Versetzen von Gegenständen offenbart, die einen Förderer umfasst, der zum Fördern einer Vielzahl von Gegenständen konfiguriert ist. Die Vorrichtung umfasst des Weiteren eine Förderabstandserfassungseinheit, die dazu konfiguriert ist, einen Förderabstand zwischen einem zu versetzenden ersten Gegenstand der Vielzahl von Gegenständen und einem zu versetzenden zweiten Gegenstand der Vielzahl von Gegenständen zu bestimmen, wobei der erste Gegenstand vor dem Versetzen des zweiten Gegenstands zu versetzen ist, und eine Handhabungsvorrichtung, die dazu konfiguriert ist, zu versetzende Gegenstände der Vielzahl von Gegenständen von dem Förderer zu einer Ablageposition zu versetzen. Die Vorrichtung ist dazu konfiguriert, eine Bewegungsgeschwindigkeit und/oder eine Bewegungsbeschleunigung basierend auf dem bestimmten Förderabstand zu bestimmen. Die Handhabungsvorrichtung ist dazu konfiguriert, den zweiten zu versetzenden Gegenstand mit der bestimmten Bewegungsgeschwindigkeit und/oder der bestimmten Bewegungsbeschleunigung zu versetzen, beispielsweise zu einer zweiten Ablageposition.

Durch die Anpassung der Bewegungsgeschwindigkeit und/oder Bewegungsbeschleunigung der Handhabungsvorrichtung an den Abstand zwischen den zu versetzenden Gegenständen können Wartezeiten vermieden werden, z. B. indem bei größeren Abständen die Bewegungsgeschwindigkeit und/oder die Bewegungsbeschleunigung reduziert wird. Umsetzvorgänge mit reduzierter Bewegungsgeschwindigkeit und/oder reduzierter Bewegungsbeschleunigung können die Beanspruchung, den Verschleiß und/oder den Energiebedarf der Handhabungsvorrichtung reduzieren. Der erste Gegenstand und der zweite Gegenstand können direkt aufeinanderfolgend zu versetzen sein. Sie müssen jedoch nicht notwendigerweise direkt aufeinanderfolgend durch den Förderer angeliefert werden. Die erste Ablageposition und die zweite Ablageposition können identisch sein. Die Gegenstände können bspw. Lebensmittel oder Lebensmittelportionen sein, die durch das Versetzen gruppiert werden können, bspw. basierend auf ihrem Gewicht.

Die Handhabungsvorrichtung kann z. B. einen Roboter oder jegliche Vorrichtung umfassen, die zum Versetzen von Gegenständen, insbesondere durch Anheben, Anfahren einer gewünschten Position und Ablegen, zum Ausführen von Pick and Place Vorgängen und/oder zum Palettieren geeignet und/oder konfiguriert ist. Insbesondere kann die Handhabungsvorrichtung einen Roboter mit serieller Kinematik umfassen. Z. B. kann die Handhabungsvorrichtung einen SCARA-Roboter (Selective Compliance Assembly Robot Arm), einen horizontalen Gelenkarmroboter, einen Gelenkarmroboter, oder einen Knickarmroboter mit fünf oder sechs Rotationsachsen umfassen. Alternativ oder zusätzlich kann die Handhabungsvorrichtung, insbesondere der Roboter, einen Delta-Roboter, bspw. mit zwei oder drei angetriebenen Rotationsachsen, umfassen.

Die Förderabstandserfassungseinheit kann bspw. eine Kamera oder ein Kamerasystem umfassen. Das Kamerasystem kann ein 2D-Kamerasystem oder ein 3D-Kamerasystem sein. Eine Kamera und/oder ein Kamerasystem kann z. B. eine Zeilenkamera, eine Matrixkamera und/oder eine Stereokamera umfassen. Alternativ oder zusätzlich kann die Förderabstandserfassungseinheit ein Lasertriangulationssystem umfassen. Alternativ oder zusätzlich kann die Förderabstandserfassungseinheit einen oder mehrere Sensoren umfassen, bspw. einen oder mehrere Strahlungssensoren, insbesondere Licht- oder Röntgensensoren. Alternativ oder zusätzlich kann die Förderabstandserfassungseinheit eine oder mehrere Strahlungsquellen, wie z. B. eine oder mehrere Licht- oder Röntgenquellen, umfassen. Es sollte klar sein, dass die Förderabstandserfassungseinheit auch Kombinationen der vorgenannten Komponenten umfassen kann, bspw. eine Lichtschranke, eine Reflexionslichtschranke oder einen Lichttaster.

Ein Förderabstand zwischen zu versetzenden Gegenständen kann mit Bezug auf die vorliegende Erfindung als Abstand zwischen Gegenständen definiert sein, die durch dieselbe Handhabungsvorrichtung zu versetzen sind. Zwischen den durch dieselbe Handhabungsvorrichtung zu versetzende Gegenständen können sich weitere Gegenstände befinden, die bspw. auszusortieren sind oder durch eine andere Handhabungsvorrichtung zu versetzen sind. Die Vorrichtung kann dazu konfiguriert sein, der Handhabungsvorrichtung und/oder den Handhabungsvorrichtungen zu versetzende Gegenstände zuzuweisen, bspw. basierend auf einem vorher bestimmten Gewicht der jeweiligen Gegenstände.

Die Vorrichtung kann dazu konfiguriert sein, für jedes Versetzen eines Gegenstands der Vielzahl von Gegenständen eine Bewegungsgeschwindigkeit und/oder eine Bewegungsbeschleunigung für das Versetzen dieses Gegenstands basierend auf seinem bestimmten Förderabstand zu einem vorhergehend zu versetzenden Gegenstand der Vielzahl von Gegenständen zu bestimmen. Die Vorrichtung kann dazu konfiguriert sein, zunächst mehrere oder alle zu versetzenden Gegenstände der Vielzahl von Gegenständen und/oder die Förderabstände zwischen den mehreren oder allen zu versetzenden Gegenständen zu erfassen und anschließend für jedes Versetzen eine Bewegungsgeschwindigkeit und/oder eine Bewegungsbeschleunigung basierend auf dem jeweiligen Förderabstand zu bestimmen. Alternativ oder zusätzlich kann die Vorrichtung dazu konfiguriert sein, zunächst einen einzelnen Förderabstand zu bestimmen und basierend auf dem bestimmten Förderabstand eine Bewegungsgeschwindigkeit und/oder eine Bewegungsbeschleunigung für das entsprechende Versetzen zu bestimmen.

Die Vorrichtung kann des Weiteren eine Fördergeschwindigkeitserfassungseinheit umfassen, die dazu konfiguriert sein kann, eine Fördergeschwindigkeit des Förderers zu erfassen. Vorteilhafterweise kann die Vorrichtung dazu konfiguriert sein, die Bewegungsgeschwindigkeit und/oder die Bewegungsbeschleunigung zusätzlich basierend auf der erfassten Fördergeschwindigkeit des Förderers zu bestimmen. Z. B. kann die Vorrichtung dazu konfiguriert sein, die Bewegungsgeschwindigkeit und/oder die Bewegungsbeschleunigung basierend auf der erfassten Fördergeschwindigkeit des Förderers und basierend auf dem bestimmten Förderabstand zu bestimmen. Alternativ oder zusätzlich kann die Fördergeschwindigkeitserfassungseinheit dazu konfiguriert sein, Positionen der Gegenstände zu erfassen und/oder zu verfolgen. Beispielsweise kann die Vorrichtung dazu konfiguriert sein, basierend auf den erfassten und/oder verfolgten Positionen der Gegenstände die Bewegungsgeschwindigkeit und/oder die Bewegungsbeschleunigung zu bestimmen. Dadurch kann eine genauere Anpassung der Bewegungsgeschwindigkeit und/oder der Bewegungsbeschleunigung ermöglicht werden.

Die Fördergeschwindigkeitserfassungseinheit kann z. B. einen Drehgeber umfassen, der bspw. zum Erfassen einer Rotation einer Antriebswalze und/oder von Führungswalzen des Förderers und/oder eines auf dem Förderer abrollenden Tastrades konfiguriert sein kann. Die Fördergeschwindigkeitserfassungseinheit kann dazu konfiguriert sein, basierend auf einer erfassten Drehzahl eine Fördergeschwindigkeit des Förderers zu bestimmen.

Insbesondere in Ausführungen, in denen die Fördergeschwindigkeitserfassungseinheit dazu konfiguriert ist, Positionen der Gegenstände zu erfassen und/oder zu verfolgen, kann die Fördergeschwindigkeitserfassungseinheit bspw. eine Kamera oder ein Kamerasystem umfassen. Das Kamerasystem kann ein 2D-Kamerasystem oder ein 3D-Kamerasystem sein. Eine Kamera und/oder ein Kamerasystem kann z. B. eine Zeilenkamera, eine Matrixkamera und/oder eine Stereokamera umfassen. Alternativ oder zusätzlich kann die Fördergeschwindigkeitserfassungseinheit ein Lasertriangulationssystem umfassen. Alternativ oder zusätzlich kann die Fördergeschwindigkeitserfassungseinheit einen oder mehrere Sensoren umfassen, bspw. einen oder mehrere Strahlungssensoren, insbesondere Licht- oder Röntgensensoren. Alternativ oder zusätzlich kann die Fördergeschwindigkeitserfassungseinheit eine oder mehrere Strahlungsquellen, wie z. B. eine oder mehrere Licht- oder Röntgenquellen, umfassen. Es sollte klar sein, dass die Fördergeschwindigkeitserfassungseinheit auch Kombinationen der vorgenannten Komponenten umfassen kann, bspw. eine Lichtschranke, eine Reflexionslichtschranke oder einen Lichttaster. Eine Fachperson erkennt, dass die genannten möglichen Komponenten der Fördergeschwindigkeitserfassungseinheit und der Förderabstandserfassungseinheit ähnlich ein können. Es kann vorteilhaft sein, eine, mehrere oder alle der beispielhaft genannten Komponenten sowohl als Komponente der Förderabstandserfassungseinheit als auch als Komponente der Fördergeschwindigkeitserfassungseinheit zu nutzen, sodass Komponenten nicht doppelt vorhanden sein müssen.

Die Vorrichtung kann mehrere Handhabungsvorrichtungen umfassen, die jeweils dazu konfiguriert sein können, zu versetzende Gegenstände der Vielzahl von Gegenständen von dem Förderer zu einer Ablageposition zu versetzen. Insbesondere in solchen Ausführungen kann die Vorrichtung dazu konfiguriert sein, den einzelnen Handhabungsvorrichtungen zu versetzende Gegenstände aus der Vielzahl von Gegenständen zuzuweisen. Die Bestimmung des Förderabstands und/oder der Bewegungsgeschwindigkeit und/oder der Bewegungsbeschleunigung kann für jeweils eine der mehreren Handhabungsvorrichtungen und/oder die ihr zugeordneten zu versetzenden Gegenstände erfolgen. Dabei kann die Vorrichtung zu jeder der Handhabungsvorrichtungen eine individuelle Förderabstandserfassungseinheit umfassen. Alternativ oder zusätzlich kann die Vorrichtung eine oder mehrere gemeinsame Förderabstandserfassungseinheiten zu allen oder mehreren Handhabungsvorrichtungen umfassen.

Eine, mehrere oder alle der mehreren Handhabungsvorrichtungen kann bzw. können vorzugsweise jeweils einen Roboter umfassen. Alternativ oder zusätzlich kann bzw. können eine, mehrere oder alle der mehreren Handhabungsvorrichtungen jeweils jede Art von Vorrichtung umfassen, die zum Versetzen von Gegenständen, insbesondere durch Anheben, Anfahren einer gewünschten Position und Ablegen, geeignet ist.

Die Vorrichtung kann des Weiteren eine Steuerung umfassen, die dazu konfiguriert sein kann, das Bestimmen eines, mehrerer oder aller der oben genannten Parameter, insbesondere des Förderabstands, der Fördergeschwindigkeit, der Bewegungsgeschwindigkeit und/oder der Bewegungsbeschleunigung, auszuführen oder zu unterstützen. Bspw. kann die Steuerung dazu konfiguriert sein, Signale von den weiter oben als mögliche Komponenten der Fördergeschwindigkeitserfassungseinheit und/oder der Förderabstandserfassungseinheit genannten Vorrichtungen zu empfangen und darauf basierend den Förderabstand, die Fördergeschwindigkeit, die Bewegungsgeschwindigkeit und/oder die Bewegungsbeschleunigung zu bestimmen. Alternativ oder zusätzlich kann die Steuerung dazu konfiguriert sein, der einen oder den mehreren Handhabungsvorrichtungen die durch sie zu versetzenden Gegenstände zuzuweisen.

Die Erfindung bezieht sich auch auf ein Verfahren zum Versetzen von Gegenständen. Das Verfahren umfasst Anliefern einer Vielzahl von Gegenständen durch einen Förderer, wobei die Vielzahl von Gegenständen einen ersten zu versetzenden Gegenstand und einen zweiten zu versetzenden Gegenstand umfasst und der erste zu versetzende Gegenstand vor dem zweiten zu versetzenden Gegenstand zu versetzen ist. Das Verfahren umfasst des Weiteren Bestimmen eines Förderabstands zwischen dem zweiten zu versetzenden Gegenstand und dem ersten zu versetzenden Gegenstand, Versetzen des ersten Gegenstands von dem Förderer zu einer ersten Ablageposition durch eine Handhabungsvorrichtung, Bestimmen einer Bewegungsgeschwindigkeit und/oder einer Bewegungsbeschleunigung basierend auf dem bestimmten Förderabstand und Versetzen des zweiten Gegenstands mit der bestimmten Bewegungsgeschwindigkeit und/oder bestimmten Bewegungsbeschleunigung durch die Handhabungsvorrichtung, bspw. von dem Förderer zu einer zweiten Ablageposition.

Wie auch bei der Vorrichtung können durch die Anpassung der Bewegungsgeschwindigkeit und/oder der Bewegungsbeschleunigung der Handhabungsvorrichtung an den Förderabstand zwischen den zu versetzenden Gegenständen Wartezeiten vermieden werden, z. B. indem bei größeren Abständen die Bewegungsgeschwindigkeit und/oder die Bewegungsbeschleunigung reduziert wird. Umsetzvorgänge mit reduzierter Bewegungsgeschwindigkeit und/oder reduzierter Bewegungsbeschleunigung können die Beanspruchung, den Verschleiß und/oder den Energiebedarf der Handhabungsvorrichtung reduzieren. Der erste Gegenstand und der zweite Gegenstand können direkt aufeinanderfolgend zu versetzen sein. Sie müssen jedoch nicht notwendigerweise direkt aufeinanderfolgend durch den Förderer angeliefert werden. Die erste Ablageposition und die zweite Ablageposition können identisch sein.

Das Verfahren kann des Weiteren Versetzen der Vielzahl von Gegenständen umfassen, wobei für jedes Versetzen eines Gegenstands der Vielzahl von Gegenständen eine Bewegungsgeschwindigkeit und/oder eine Bewegungsbeschleunigung für das Versetzen dieses Gegenstands basierend auf seinem bestimmten Förderabstand zu einem vorhergehend zu versetzenden Gegenstand der Vielzahl von Gegenständen bestimmt wird. Das Verfahren kann umfassen, zunächst mehrere oder alle zu versetzenden Gegenstände der Vielzahl von Gegenständen und/oder die Förderabstände zwischen den mehreren oder allen Gegenständen zu erfassen und anschließend für jedes Versetzen eines Gegenstands basierend auf dem jeweiligen bestimmten Förderabstand dieses Gegenstands zu einem vorhergehend zu versetzenden Gegenstand eine Bewegungsgeschwindigkeit und/oder eine Bewegungsbeschleunigung zu bestimmen. Alternativ oder zusätzlich kann das Verfahren umfassen, zunächst einen einzelnen Förderabstand zu bestimmen und basierend auf dem bestimmten Förderabstand eine Bewegungsgeschwindigkeit und/oder eine Bewegungsbeschleunigung für das entsprechend auszuführende Versetzen zu bestimmen.

Das Verfahren kann des Weiteren Erfassen einer Fördergeschwindigkeit des Förderers umfassen. Vorzugsweise kann die Bewegungsgeschwindigkeit und/oder die Bewegungsbeschleunigung zusätzlich basierend auf der Fördergeschwindigkeit des Förderers bestimmt werden. Z. B. kann die Bewegungsgeschwindigkeit und/oder die Bewegungsbeschleunigung basierend auf der erfassten Fördergeschwindigkeit des Förderers und basierend auf dem bestimmten Förderabstand bestimmt werden. Dadurch kann eine genauere Anpassung der Bewegungsgeschwindigkeit und/oder der Bewegungsbeschleunigung ermöglicht werden.

Die Handhabungsvorrichtung kann einen Roboter umfassen. Alternativ oder zusätzlich kann die Handhabungsvorrichtung jede Art von Vorrichtung umfassen, die zum Versetzen von Gegenständen, insbesondere durch Anheben, Anfahren einer gewünschten Position und Ablegen, geeignet ist.

Die Vorrichtung kann mehrere Handhabungsvorrichtungen umfassen, die jeweils dazu konfiguriert sein können, zu versetzende Gegenstände der Vielzahl von Gegenständen von dem Förderer zu einer Ablageposition zu versetzen. Insbesondere in solchen Ausführungen kann das Verfahren umfassen, den einzelnen Handhabungsvorrichtungen zu versetzende Gegenstände aus der Vielzahl von Gegenständen zuzuweisen. Die Bestimmung des Förderabstands und/oder der Bewegungsgeschwindigkeit und/oder der Bewegungsbeschleunigung kann für jeweils eine der mehreren Handhabungsvorrichtungen und/oder die ihr zugeordneten zu versetzenden Gegenstände erfolgen. Dabei kann die Vorrichtung zu jeder der Handhabungsvorrichtungen eine individuelle Förderabstandserfassungseinheit umfassen. Alternativ oder zusätzlich kann die Vorrichtung eine oder mehrere gemeinsame Förderabstandserfassungseinheiten zu allen oder mehreren Handhabungsvorrichtungen umfassen.

Eine, mehrere oder alle der mehreren Handhabungsvorrichtungen kann bzw. können vorzugsweise jeweils einen Roboter umfassen. Alternativ oder zusätzlich kann bzw. können eine, mehrere oder alle der mehreren Handhabungsvorrichtungen jeweils jede Art von Vorrichtung umfassen, die zum Versetzen von Gegenständen, insbesondere durch Anheben, Anfahren einer gewünschten Position und Ablegen, geeignet ist. Des Weiteren können sämtliche weiteren weiter oben mit Bezug auf die Handhabungsvorrichtung beispielhaft genannten Varianten auf mehrere oder alle Handhabungsvorrichtungen anwendbar sein.

Die Erfindung bezieht sich auch auf eine Vorrichtung zum Versetzen von Gegenständen, umfassend eine Handhabungsvorrichtung, die dazu konfiguriert ist, eine Vielzahl zu versetzender Gegenstände von einer Aufnahmeposition zu einer aus einer Vielzahl von Ablagepositionen zu versetzen, wobei die Ablagepositionen jeweils unterschiedliche Abstände zu der Aufnahmeposition aufweisen. Die Vorrichtung ist dazu konfiguriert, eine Bewegungsgeschwindigkeit und/oder eine Bewegungsbeschleunigung basierend auf einem Abstand zwischen der Aufnahmeposition und einer ersten Ablageposition der Ablagepositionen zu bestimmen, zu welcher ein erster Gegenstand der Vielzahl von Gegenständen zu versetzen ist. Die Handhabungsvorrichtung ist dazu konfiguriert, den ersten Gegenstand mit der bestimmten Bewegungsgeschwindigkeit und/oder der bestimmten Bewegungsbeschleunigung von der Aufnahmeposition zu der ersten Ablageposition zu versetzen.

Die Erfindung bezieht sich auch auf eine Vorrichtung zum Versetzen von Gegenständen, umfassend einen Förderer, der zum Fördern einer Vielzahl von Gegenständen konfiguriert ist, eine Fördergeschwindigkeitserfassungseinheit, die dazu konfiguriert ist, Positionen eines zu versetzenden ersten Gegenstands der Vielzahl von Gegenständen und eines zu versetzenden zweiten Gegenstands der Vielzahl von Gegenständen zu erfassen und/oder zu verfolgen. Der erste Gegenstand ist vor dem Versetzen des zweiten Gegenstands zu versetzen. Die Vorrichtung umfasst des Weiteren eine Handhabungsvorrichtung, die dazu konfiguriert ist, zu versetzende Gegenstände der Vielzahl von Gegenständen von dem Förderer zu einer ersten Ablageposition zu versetzen. Die Vorrichtung ist dazu konfiguriert, basierend auf den erfassten und/oder verfolgten Positionen des ersten Gegenstands und des zweiten Gegenstands eine Bewegungsgeschwindigkeit und/oder eine Bewegungsbeschleunigung zu bestimmen. Die Handhabungsvorrichtung ist dazu konfiguriert, den zweiten zu versetzenden Gegenstand mit der bestimmten Bewegungsgeschwindigkeit und/oder der bestimmten Bewegungsbeschleunigung zu versetzen.

Die Erfindung bezieht sich auf eine Vorrichtung sowie auf ein Verfahren der vorstehend beschriebenen Art. Im Folgenden werden Ausführungen beispielhaft anhand von Zeichnungen näher erläutert.
Figur 1 zeigt eine schematische Seitenansicht einer Vorrichtung zum Versetzen von Gegenständen gemäß einem ersten Ausführungsbeispiel.
Figur 2 zeigt eine schematische Draufsicht von oben der Vorrichtung zum Versetzen von Gegenständen gemäß dem Ausführungsbeispiel aus Figur 1.
Figur 3 zeigt eine schematische Seitenansicht einer Vorrichtung zum Versetzen von Gegenständen gemäß einem weiteren Ausführungsbeispiel.
Figur 4 zeigt eine schematische Draufsicht von oben der Vorrichtung zum Versetzen von Gegenständen gemäß dem Ausführungsbeispiel aus Figur 3.

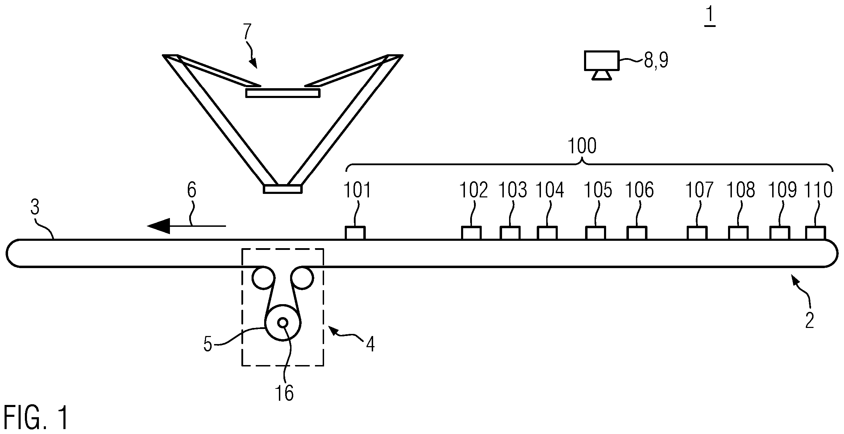

In Figur 1 ist eine Vorrichtung 1 zum Versetzen von Gegenständen in einer schematischen Seitenansicht dargestellt. Die Vorrichtung 1 kann einen Förderer 2 umfassen. Wie im vorliegenden Ausführungsbeispiel gezeigt, kann der Förderer ein Förderelement, insbesondere ein Förderband 3, umfassen. Der Förderer 2, insbesondere das Förderband 3, kann dazu konfiguriert sein, eine Vielzahl von Gegenständen 100, insbesondere mit einer Fördergeschwindigkeit 6, zu fördern. Der Förderer 2 kann des Weiteren einen Antrieb 4 umfassen. Der Antrieb 4 kann dazu konfiguriert sein, das Antriebselement des Förderers, insbesondere das Förderband 3, anzutreiben. Der Antrieb kann eine Antriebswalze 5 umfassen. Des Weiteren kann der Antrieb einen Motor (nicht gezeigt) umfassen. Der Motor kann dazu konfiguriert sein, die Antriebswalze 5 anzutreiben. Die Antriebswalze 5 kann dazu konfiguriert sein, das Förderband 3 mit der Fördergeschwindigkeit 6 anzutreiben.

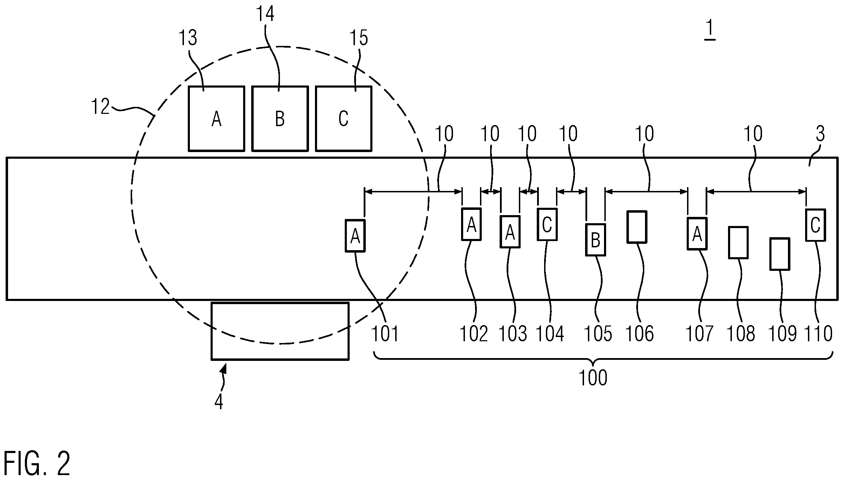

Die Vorrichtung 1 kann des Weiteren eine Handhabungsvorrichtung 7 umfassen. Wie im vorliegenden Ausführungsbeispiel gezeigt, kann die Handhabungsvorrichtung 7 einen Roboter, bspw. einen Delta-Roboter, umfassen. Die Handhabungsvorrichtung 7 kann dazu konfiguriert sein, einen oder mehrere Gegenstände aus der Vielzahl von Gegenständen 100 zu versetzen, bspw. den Gegenstand anzuheben, eine gewünschte Position anzufahren und den Gegenstand wieder abzulegen. Die Vorrichtung 1 kann des Weiteren eine Förderabstandserfassungseinheit 8 umfassen. Wie im vorliegenden Ausführungsbeispiel gezeigt, kann die Förderabstandserfassungseinheit 8 eine Kamera 9 umfassen. Die Förderabstandserfassungseinheit 8, insbesondere die Kamera 9, kann dazu konfiguriert sein, einen oder mehrere Förderabstände 10 (s. Figur 2) zwischen zu versetzenden Gegenständen aus der Vielzahl von Gegenständen 100 zu erfassen.

In Figur 2 sind Komponenten der Vorrichtung aus Figur 1 in einer schematischen Draufsicht von oben dargestellt. Durch die gestrichelte Linie ist ein denkbarer Arbeitsbereich 12 der Handhabungsvorrichtung 7 dargestellt. Es sollte klar sein, dass die Kreisform lediglich bespielhaft ist und der Arbeitsbereich 12 der Handhabungsvorrichtung 7 eine andere geeignete Form aufweisen kann. In Figur 2 ebenfalls zu erkennen sind drei Ablagepositionen, eine erste Ablageposition 13, eine zweite Ablageposition 14 und eine dritte Ablageposition15. Die Ablagepositionen 13, 14, 15 können Teil der Vorrichtung 1 sein oder Teil einer anderen Vorrichtung, bspw. zum Abtransportieren der an die jeweilige Ablageposition 13, 14, 15 versetzten Gegenstände.

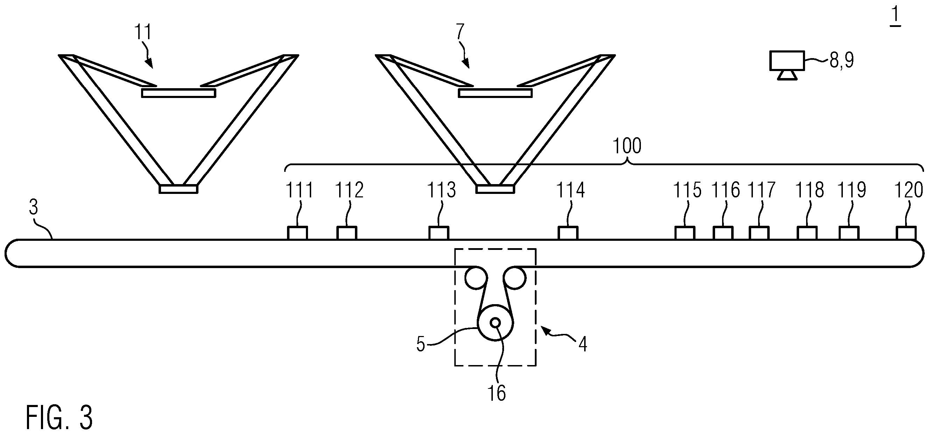

Wie in Figur 1 und Figur 2 beispielhaft dargestellt, kann die Vielzahl von Gegenständen 100 die Gegenstände 101 bis 110 umfassen. Einer oder mehrere von den Gegenständen 101 bis 110, bspw. in Figur 2 Gegenstände 101, 102, 103, 104, 105, 107, 110 können durch die Handhabungsvorrichtung 7 zu versetzende Gegenstände sein. Die übrigen Gegenstände, bspw. in Figur 2 Gegenstände 106, 108, 109, können nicht durch die Handhabungsvorrichtung 7 zu versetzende Gegenstände sein. Nicht durch die Handhabungsvorrichtung 7 zu versetzende Gegenstände können bspw. aussortiert werden oder, wie später noch genauer erläutert werden wird, durch eine zweite Handhabungsvorrichtung 11 (s. Figur 3) zu versetzen sein.

Die Ablagepositionen 13, 14, 15 sind in Figur 2 zur Illustration jeweils mit Buchstaben A, B, C gekennzeichnet. Einige der Gegenstände 101 bis 110 sind ebenfalls zur Illustration mit Buchstaben A, B, C gekennzeichnet. Dadurch ist einerseits erkenntlich, welche Gegenstände an welche Ablageposition zu versetzen sind. Andererseits ist erkenntlich, welche der Gegenstände 101 bis 110 durch die Handhabungsvorrichtung 7 zu versetzen sind. Die durch Buchstaben A, B, C gekennzeichneten Gegenstände 101, 102, 103, 104, 105, 107, 110 können durch die Handhabungsvorrichtung 7 zu versetzen sein. Die Gegenstände ohne Buchstaben können nicht durch die Handhabungsvorrichtung 7 zu versetzen sein.

Zwischen den einzelnen zu versetzenden, insbesondere durch die Handhabungsvorrichtung 7 zu versetzenden, Gegenständen 101, 102, 103, 104, 105, 107, 110 kann jeweils ein Förderabstand 10 vorgesehen sein. Die Förderabstandserfassungseinheit 8 kann dazu konfiguriert sein, jeden der Förderabstände 10 zu erfassen. Allgemein kann die Vorrichtung 1 dazu konfiguriert sein, basierend auf jeweils einem Förderabstand 10 eine Bewegungsgeschwindigkeit und/oder eine Bewegungsbeschleunigung zu bestimmen, mit welcher die Handhabungsvorrichtung 7 ein Versetzen ausführen soll. Dazu kann ein Förderabstand 10 zwischen einem ersten zu versetzenden Gegenstand, bspw. dem Gegenstand 101 in der Figur 2, und einem zweiten zu versetzenden Gegenstand, bspw. dem Gegenstand 102 in der Figur 2, herangezogen werden.

Das generelle Prinzip soll nun bespielhaft anhand des Versetzens des Gegenstands 102 erläutert werden. Die Vorrichtung 1 kann dazu konfiguriert sein, basierend auf dem (vor dem Versetzen des Gegenstands 101) bestimmten Förderabstand 10 zwischen dem ersten zu versetzenden Gegenstand 101 und dem zweiten zu versetzenden Gegenstand 102 eine Bewegungsgeschwindigkeit und/oder eine Bewegungsbeschleunigung zu bestimmen. Die Handhabungsvorrichtung 7 kann dazu konfiguriert sein, den zweiten zu versetzenden Gegenstand 102 mit der bestimmten Bewegungsgeschwindigkeit und/oder der bestimmten Bewegungsbeschleunigung zu versetzen.

Als erster zu versetzender Gegenstand kann stets ein Gegenstand angesehen werde, der unmittelbar vor einem zweiten zu versetzenden Gegenstand zu versetzen ist. Dabei sollte klar sein, dass ein und derselbe Gegenstand situationsabhängig nacheinander als zweiter und als erster Gegenstand angesehen werden kann. Bspw. kann mit Bezug auf ein Bestimmen der Bewegungsgeschwindigkeit und/oder der Bewegungsbeschleunigung für das Versetzen des Gegenstands 102 der Gegenstand 101 als erster Gegenstand angesehen werden und der Gegenstand 102 als zweiter Gegenstand angesehen werden. Bspw. mit Bezug auf ein Bestimmen der Bewegungsgeschwindigkeit und/oder der Bewegungsbeschleunigung für das Versetzen des Gegenstands 103 kann der Gegenstand 102 als erster Gegenstand angesehen werden und kann der Gegenstand 103 als zweiter Gegenstand angesehen werden etc. Die obigen Erläuterungen können also auf die folgenden Versetzungen der durch die Handhabungsvorrichtung 7 zu versetzenden Gegenstände 103, 104, 105, 107, 110 anwendbar sein.

Zu besseren Anpassung der Bewegungsgeschwindigkeit und/oder der Bewegungsbeschleunigung der Handhabungsvorrichtung kann die Vorrichtung eine Fördergeschwindigkeitserfassungseinheit 16 umfassen. Die Fördergeschwindigkeitserfassungseinheit 16 kann dazu konfiguriert sein, die Fördergeschwindigkeit 6 des Förderers 2 zu bestimmen. Die Fördergeschwindigkeitserfassungseinheit 16 kann, wie in Figur 1 beispielhaft gezeigt, einen Drehgeber 16 an der Antriebswalze 5 des Förderers 2 umfassen. Die Vorrichtung 1 kann dazu konfiguriert sein, die Bewegungsgeschwindigkeit und/oder die Bewegungsbeschleunigung zusätzlich basierend auf der erfassten Fördergeschwindigkeit 6 zu bestimmen. Das kann bedeuten, dass die Vorrichtung 1 dazu konfiguriert sein kann, die Bewegungsgeschwindigkeit und/oder die Bewegungsbeschleunigung basierend auf dem jeweils bestimmten Förderabstand 1 und der bestimmten Fördergeschwindigkeit 6 zu bestimmen.

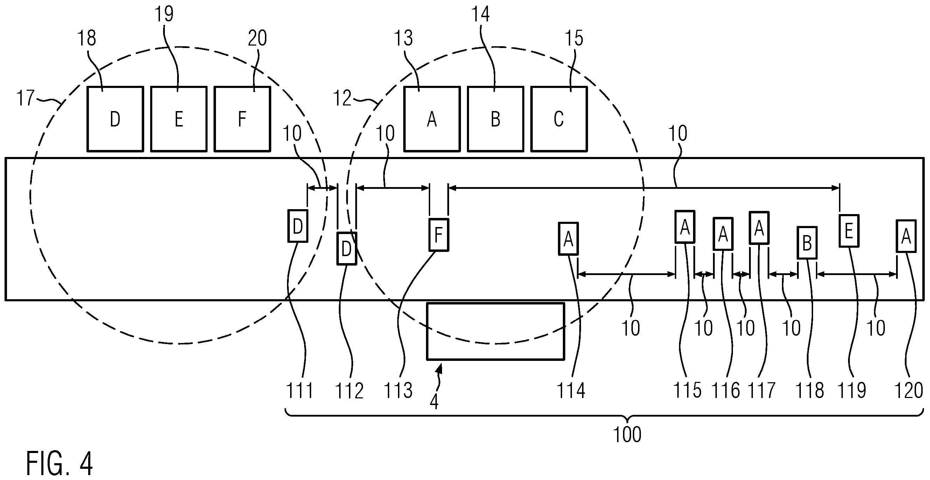

In Figur 3 ist die Vorrichtung 1 gemäß einem weiteren Ausführungsbeispiel in einer schematischen Seitenansicht ähnlich Figur 1 dargestellt. In Figur 4 ist die Vorrichtung 1 gemäß dem in Figur 3 dargestellten Ausführungsbeispiel in einer schematischen Draufsicht von oben ähnlich Figur 2 dargestellt. Gegenüber dem mit Bezug auf Figuren 1 und 2 erläuterten Ausführungsbeispiel weist die in den Figuren 3 und 4 dargestellte Vorrichtung 1 zusätzlich eine zweite Handhabungsvorrichtung 11 auf. In Figur 4 ist, ähnlich wie in Figur 2, ein beispielhafter zweiter Arbeitsbereich 17 der zweiten Handhabungsvorrichtung 11 durch gestrichelte Linien dargestellt. Des Weiteren sind in Figur 4 zusätzliche Ablagepositionen, nämlich eine vierte Ablageposition 18, eine fünfte Ablageposition 19 und eine sechste Ablageposition 20, zu erkennen.

Die Vielzahl von Gegenständen 100 kann, wie im vorliegenden Ausführungsbeispiel dargestellt, die Gegenstände 111 bis 120 umfassen. Analog zum ersten Ausführungsbeispiel sind die Ablagepositionen 13, 14, 15, 18, 19, 20 sowie die durch die erste Handhabungsvorrichtung 7 und die zweite Handhabungsvorrichtung 11 zu versetzenden Gegenstände 111 bis 120 durch Buchstaben A bis F gekennzeichnet um die Zuweisung der jeweiligen Gegenstände zu den jeweiligen Ablagepositionen zu illustrieren.

Die Vorrichtung 1 gemäß dem zweiten Ausführungsbeispiel kann dazu konfiguriert sein, die Bestimmung der Bewegungsgeschwindigkeit und/oder der Bewegungsbeschleunigung jeweils separat für die erste Handhabungsvorrichtung 7 und die zweite Handhabungsvorrichtung 11 durchzuführen. Dabei können nur der jeweiligen Handhabungsvorrichtung 7, 11 zugewiesene Gegenstände und/oder Förderabstände 10 zwischen den der jeweiligen Handhabungsvorrichtung 7, 11 zugewiesenen Gegenständen. Bspw. können bei der Bestimmung der Bewegungsgeschwindigkeit und/oder der Bewegungsbeschleunigung der ersten Handhabungsvorrichtung 7 nur die Gegenstände 114 bis 118 und 119 berücksichtigt werden. Des Weiteren können bspw. bei der der Bestimmung der Bewegungsgeschwindigkeit und/oder der Bewegungsbeschleunigung der zweiten Handhabungsvorrichtung 11 nur die Gegenstände 111 bis 130 und 120 berücksichtigt werden. Nachdem die Gegenstände der jeweiligen Handhabungsvorrichtung zugewiesen wurden, erfolgt die Bestimmung der Bewegungsgeschwindigkeiten und/oder der Bewegungsbeschleunigungen dann analog zu der weiter oben erläuterten Bestimmung durch die Vorrichtung 1 gemäß dem ersten Ausführungsbeispiel.

## Patentansprüche

1. Vorrichtung (1) zum Versetzen von Gegenständen, umfassend einen Förderer (2), der zum Fördern einer Vielzahl von Gegenständen (100) konfiguriert ist, eine Förderabstandserfassungseinheit (8), die dazu konfiguriert ist, einen Förderabstand (10) zwischen einem zu versetzenden ersten Gegenstand (101) der Vielzahl von Gegenständen (100) und einem zu versetzenden zweiten Gegenstand (102) der Vielzahl von Gegenständen (100) zu bestimmen, wobei der erste Gegenstand (101) vor dem Versetzen des zweiten Gegenstands (102) zu versetzen ist, und eine Handhabungsvorrichtung (7), die dazu konfiguriert ist, zu versetzende Gegenstände (101, 102) der Vielzahl von Gegenständen (100) von dem Förderer (2) zu einer ersten Ablageposition (13) zu versetzen,
wobei die Vorrichtung (1) dazu konfiguriert ist, eine Bewegungsgeschwindigkeit und/oder eine Bewegungsbeschleunigung basierend auf dem bestimmten Förderabstand (10) zu bestimmen, und wobei die Handhabungsvorrichtung (7) dazu konfiguriert ist, den zweiten zu versetzenden Gegenstand (102) mit der bestimmten Bewegungsgeschwindigkeit und/oder der bestimmten Bewegungsbeschleunigung zu versetzen.

2. Vorrichtung nach Anspruch 1, wobei die Vorrichtung (1) dazu konfiguriert ist, für jedes Versetzen eines Gegenstands (102) der Vielzahl von Gegenständen (100) eine Bewegungsgeschwindigkeit und/oder eine Bewegungsbeschleunigung für das Versetzen dieses Gegenstands (102) basierend auf seinem bestimmten Förderabstand (10) zu einem vorhergehend zu versetzenden Gegenstand (101) der Vielzahl von Gegenständen (100) zu bestimmen.

3. Vorrichtung nach einem der vorangehenden Ansprüche, des Weiteren umfassend eine Fördergeschwindigkeitserfassungseinheit (16), die dazu konfiguriert ist, eine Fördergeschwindigkeit des Förderers (2) zu erfassen.

4. Vorrichtung nach Anspruch 3, wobei die Vorrichtung (1) des Weiteren dazu konfiguriert ist, die Bewegungsgeschwindigkeit und/oder die Bewegungsbeschleunigung zusätzlich basierend auf der erfassten Fördergeschwindigkeit (6) des Förderers (2) zu bestimmen.

5. Vorrichtung nach einem der vorangehenden Ansprüche, wobei die Handhabungsvorrichtung (7) einen Roboter umfasst.

6. Vorrichtung nach einem der vorangehenden Ansprüche, wobei die Vorrichtung (1) mehrere Handhabungsvorrichtungen (7, 11) umfasst, die vorzugsweise jeweils einen Roboter umfassen.

7. Verfahren zum Versetzen von Gegenständen (100), umfassend:
Anliefern einer Vielzahl von Gegenständen (100) durch einen Förderer (2), wobei die Vielzahl von Gegenständen (100) einen ersten zu versetzenden Gegenstand (101) und einen zweiten zu versetzenden Gegenstand (102) umfasst und der erste zu versetzende Gegenstand (101) vor dem zweiten zu versetzenden Gegenstand (102) zu versetzen ist,
Bestimmen eines Förderabstands (10) zwischen dem zweiten zu versetzenden Gegenstand (102) und dem ersten Gegenstand (101),
Versetzen des ersten Gegenstands (101) von dem Förderer (2) zu einer ersten Ablageposition (13) durch eine Handhabungsvorrichtung (7),
Bestimmen einer Bewegungsgeschwindigkeit und/oder einer Bewegungsbeschleunigung basierend auf dem bestimmten Förderabstand (10),
Versetzen des zweiten Gegenstands (102) mit der bestimmten Bewegungsgeschwindigkeit und/oder der bestimmten Bewegungsbeschleunigung durch die Handhabungsvorrichtung (7).

8. Verfahren nach Anspruch 7, des Weiteren umfassend Versetzen der Vielzahl von Gegenständen (100), wobei für jedes Versetzen eines Gegenstands (102) der Vielzahl von Gegenständen (100) eine Bewegungsgeschwindigkeit und/oder eine Bewegungsbeschleunigung für das Versetzen dieses Gegenstands (102) basierend auf seinem bestimmten Förderabstand (10) zu einem vorhergehend zu versetzenden Gegenstand (101) der Vielzahl von Gegenständen (100) bestimmt wird.

9. Verfahren nach Anspruch 7 oder 8, des Weiteren umfassend Erfassen einer Fördergeschwindigkeit des Förderers (2).

10. Verfahren nach Anspruch 9, wobei die Bewegungsgeschwindigkeit und/oder die Bewegungsbeschleunigung zusätzlich basierend auf der Fördergeschwindigkeit (6) des Förderers (2) bestimmt wird.

11. Verfahren nach einem der Ansprüche 7 bis 10, wobei die Handhabungsvorrichtung (7) einen Roboter umfasst.

12. Vorrichtung (1) zum Versetzen von Gegenständen, umfassend eine Handhabungsvorrichtung (7), die dazu konfiguriert ist, eine Vielzahl zu versetzender Gegenstände (100) von einer Aufnahmeposition zu einer aus einer Vielzahl von Ablagepositionen (13, 14, 15, 18, 19, 20) zu versetzen, wobei die Ablagepositionen (13, 14, 15, 18, 19, 20) jeweils unterschiedliche Abstände zu der Aufnahmeposition aufweisen
wobei die Vorrichtung (1) dazu konfiguriert ist, eine Bewegungsgeschwindigkeit und/oder eine Bewegungsbeschleunigung basierend auf einem Abstand zwischen der Aufnahmeposition und einer ersten Ablageposition (13) der Ablagepositionen (13, 14, 15, 18, 19, 20) zu bestimmen, zu welcher ein erster Gegenstand (101) der Vielzahl von Gegenständen (100) zu versetzen ist, und wobei die Handhabungsvorrichtung (7) dazu konfiguriert ist, den ersten Gegenstand (101) mit der bestimmten Bewegungsgeschwindigkeit und/oder der bestimmten Bewegungsbeschleunigung von der Aufnahmeposition zu der ersten Ablageposition (13) zu versetzen.

13. Vorrichtung (1) zum Versetzen von Gegenständen, umfassend einen Förderer (2), der zum Fördern einer Vielzahl von Gegenständen (100) konfiguriert ist, eine Fördergeschwindigkeitserfassungseinheit (16), die dazu konfiguriert ist, Positionen eines zu versetzenden ersten Gegenstands (101) der Vielzahl von Gegenständen (100) und eines zu versetzenden zweiten Gegenstands (102) der Vielzahl von Gegenständen (100) zu erfassen und/oder zu verfolgen, wobei der erste Gegenstand (101) vor dem Versetzen des zweiten Gegenstands (102) zu versetzen ist, und eine Handhabungsvorrichtung (7), die dazu konfiguriert ist, zu versetzende Gegenstände (101, 102) der Vielzahl von Gegenständen (100) von dem Förderer (2) zu einer ersten Ablageposition (13) zu versetzen,
wobei die Vorrichtung (1) dazu konfiguriert ist, basierend auf den erfassten und/oder verfolgten Positionen des ersten Gegenstands (101) und des zweiten Gegenstands (102) eine Bewegungsgeschwindigkeit und/oder eine Bewegungsbeschleunigung zu bestimmen, und wobei die Handhabungsvorrichtung (7) dazu konfiguriert ist, den zweiten zu versetzenden Gegenstand (102) mit der bestimmten Bewegungsgeschwindigkeit und/oder der bestimmten Bewegungsbeschleunigung zu versetzen.
